# EUROPEAN PATENT SPECIFICATION

(11) **EP 2 457 458 B1**
(45) Date of publication and mention of the grant of the patent: **29.01.2014**
(21) Application number: 11191149.1
(22) Date of filing: 29.11.2011
(51) Int. Cl.: A41H 43/04, B29C 65/52, D06H 5/00, A41D 27/24

(54) **Cloth bonding apparatus**
Vorrichtung zum Verbinden vom Stoff
Appareil de liaison de tissus

(30) Priority: 30.11.2010 JP 2010266164
(43) Date of publication of application: 30.05.2012
(73) Proprietor: Brother Kogyo Kabushiki Kaisha, Nagoya-shi, Aichi 467-8561 (JP)
(72) Inventor: Nemoto, Yoshimitsu, Nagoya-shi, Aichi 467-8562 (JP); Umeda, Kazutoshi, Nagoya-shi, Aichi 467-8562 (JP); Yamaura, Hiroki, Nagoya-shi, Aichi 467-8562 (JP); Iwakoshi, Hiroyasu, Nagoya-shi, Aichi 467-8562 (JP); Nishimura, Kazuto, Nagoya-shi, Aichi 467-8562 (JP); Minagawa, Yuichiro, Nagoya-shi, Aichi 467-8562 (JP); Enya, Tetsuji, Nagoya-shi, Aichi 467-8562 (JP); Horibe, Yoshihiko, Nagoya-shi, Aichi 467-8562 (JP)
(74) Representative: Prüfer & Partner GbR European Patent Attorneys

(56) References cited:
- EP-A1- 2 233 277
- GB-A- 1 014 111
- JP-A- 2010 222 764
- US-A1- 2006 043 102

## Description

### BACKGROUND

The present disclosure relates to a cloth bonding apparatus including a storage chamber that stores an adhesive.

A cloth bonding apparatus discharges a heated liquid adhesive from a nozzle. The adhesive attaches to a cloth. An operator overlays a cloth to be bonded on the cloth to which the adhesive is attached. The cloth bonding apparatus presses both the cloths, and bonds the cloth and the cloth with the adhesive, thereby reducing unevenness of a thread that occurs on a cloth surface during sewing.

For example, a cloth bonding apparatus described in Japanese Laid-Open Patent Publication No. 2010-222764 stores a thermal melting adhesive in a storage chamber. The thermal melting adhesive liquefies when it is heated to a predetermined temperature, and it solidifies at a temperature lower than the predetermined temperature. The cloth bonding apparatus seals the storage chamber by closing a lid of the storage chamber. The cloth bonding apparatus supplies gas into the storage chamber from the outside of the storage chamber, thereby extruding the adhesive from the storage chamber. The cloth bonding apparatus supplies the adhesive extruded from the storage chamber to a nozzle. The adhesive is discharged from the nozzle and attached to a cloth.

### SUMMARY

In the bonding apparatus described in the above-described Japanese Laid-Open Patent Publication No. 2010-222764, the gas supplied from the outside of the storage chamber may contain water. When the gas containing water accumulates in the storage chamber, a metal component of a gas supply channel that is provided in the storage chamber or on the storage chamber may rust. If the rust develops, a hole is opened in the metal component. If the gas leaks from the hole, it is not possible to extrude the adhesive from the storage chamber.

The thermal melting adhesive reacts with water and solidifies. Once the adhesive solidifies, it cannot be liquefied. If the gas containing water accumulates in the storage chamber, the adhesive in the storage chamber reacts with the water and solidifies. The solidified adhesive cannot be ejected from the nozzle.

EP 2 233 277 A1 discloses a generic cloth bonding apparatus according to the preamble of claim 1.

Another cloth bonding apparatus is known from GB 1,014,111; and a method and an apparatus for applying a solvent are known from US 2006/0043102 A1.

It is an object of the present disclosure to provide a cloth bonding apparatus that is capable of inhibiting gas containing water from accumulating in a storage chamber.

A cloth bonding apparatus according to the present disclosure includes: a storage chamber which has an opening and which is adapted to stores an adhesive; a lid portion which is provided on the opening of the storage chamber and which is capable of opening and closing the opening; a gas supply port which is provided in the lid portion and which is adapted to supply gas into the storage chamber; and a pressure source which is adapted to supply the gas through the gas supply port into the storage chamber, thereby extruding the adhesive in the storage chamber. The cloth bonding apparatus is characterized by including a gas discharge port which is adapted to discharge the gas in the storage chamber to an outside of the storage chamber.

The gas discharge port is adapted to discharge the gas containing water in the storage chamber to the outside of the storage chamber. Therefore, the cloth bonding apparatus can inhibit a metal component from rusting.

The cloth bonding apparatus further includes: a discharge valve which is adapted to open and close the gas discharge port, and which discharges the gas in the storage chamber to the outside of the storage chamber by opening the gas discharge port; and a discharge valve control portion which controls switching between opening and closing of the discharge valve.

The discharge valve control portion that controls the discharge valve inhibits the gas discharge port from being constantly opened. Therefore, the cloth bonding apparatus can exchange the gas in the storage chamber and can inhibit the gas containing water from accumulating in the storage chamber.

The cloth bonding apparatus may further include: a nozzle which has an adhesive discharge opening through which the adhesive is dischargeable; a supply portion which, in case where the pressure source supplies the gas through the gas supply port into the storage chamber, is adapted to supply the nozzle with the adhesive extruded from the storage chamber; and a supply control portion which controls driving of the supply portion. The discharge valve control portion may switch the discharge valve to an open state in case where the supply control portion stops supply of the adhesive by the supply portion.

In case where the supply of the adhesive to the nozzle is stopped, the discharge valve control portion switches the discharge valve to the open state. Therefore, when bonding is not performed, the cloth bonding apparatus can discharge the gas in the storage chamber to the outside of the storage chamber. The cloth bonding apparatus can inhibit gas from being discharged through the gas discharge port when bonding is performed, and can inhibit a lack of the pressure that is necessary to extrude the adhesive in the storage chamber.

The cloth bonding apparatus may further include: an input portion which starts and stops the driving of the supply portion by the supply control portion; a measurement portion which measures an elapsed time from when the input portion stops the driving of the supply portion by the supply control portion; and a time setting portion which sets a time period from when the input portion stops the driving of the supply portion by the supply control portion to when the discharge valve control portion switches the discharge valve to the open state. The discharge valve control portion may switch the discharge valve to the open state in case where the elapsed time has reached the time period set by the time setting portion.

In case where the elapsed time from when the drive of the supply portion is stopped reaches the time period set by the time setting portion, the discharge valve control portion switches the discharge valve to the open state. Therefore, when a time period during which the supply portion is stopped is shorter than the set time period, the cloth bonding apparatus can inhibit the discharge valve from switching to the open state. When the drive of the supply portion is re-started, the cloth bonding apparatus can easily supply the adhesive in the storage chamber to the nozzle.

The cloth bonding apparatus my further include a heating portion which is adapted to heat the adhesive in the storage chamber; and a heating control portion which controls driving of the heating portion. The discharge valve control portion may switch the discharge valve to the open state in case where the heating portion has heated the adhesive in the storage chamber to a predetermined temperature in accordance with control by the heating control portion.

In case where the heating position heats the adhesive in the storage chamber to the predetermined temperature, the discharge valve control portion switches the discharge valve to the open state. Therefore, the cloth bonding apparatus can discharge the gas containing water that is generated by heating in the storage chamber to the outside of the storage chamber, and can inhibit a metal component from rusting.

The storage chamber may be adapted to detachably house a cartridge which stores the adhesive, and the cartridge may be adapted to include a desiccant which adsorbs water in the cartridge. The gas supply port may be adapted to supply the gas from the pressure source into the cartridge, and the gas discharge port may be adapted to discharge the gas in the cartridge to the outside of the storage chamber.

The storage chamber may be adapted to detachably houses the cartridge which stores the adhesive. The cartridge may be adapted to include the desiccant which inhibits the adhesive from reacting with water and the state of the adhesive from changing. Therefore, the cloth bonding apparatus can discharge, through the gas discharge port, the gas containing water that cannot be sufficiently absorbed by the desiccant.

The lid portion may include the gas discharge port and a needle portion which is adapted to form a hole in the cartridge, the hole being used to supply the gas from the pressure source into the cartridge. The needle portion may include a cut-out portion in an outer periphery, the cut-out portion being adapted to discharge the gas in the cartridge to the outside of the cartridge. The gas supply port may pass through an internal portion of the needle portion.

The lid portion may include the needle portion which is adapted to form a hole in the cartridge. The hole is used to supply the gas from the pressure source into the cartridge. The needle portion may include the cut-out portion in its outer periphery. The cut-out portion may discharge the gas in the cartridge to the outside of the cartridge. Therefore, the cloth bonding apparatus allows the gas in the cartridge to easily flow from the cut-out portion to the gas discharge port provided in the lid portion.

### BRIEF DESCRIPTION OF THE DRAWINGS

Exemplary embodiments of the present disclosure will be described below in detail with reference to the accompanying drawings in which:

FIG. 1 is a perspective view of an entire cloth bonding apparatus 1;

FIG. 2 is a perspective view of a bonding device 2;

FIG. 3 is a front view of the bonding device 2;

FIG. 4 is a left side view of the bonding device 2;

FIG. 5 is a perspective view of an internal configuration of the bonding device 2;

FIG. 6 is a partially enlarged cross-sectional view of a storage chamber 18;

FIG. 7 is a partially enlarged perspective view showing the vicinity of a needle portion 70 of a lid portion 47;

FIG. 8 is a partial cross-sectional view taken in the direction of arrows along a line II-II in FIG. 2;

FIG. 9 is a partial cross-sectional view taken in the direction of arrows along a line III-III in FIG. 2;

FIG. 10 is a block diagram showing an electrical configuration of the cloth bonding apparatus 1;

FIG. 11 is a flowchart showing exhaust control processing;

FIG. 12 is a flowchart showing exhaust control processing; and

FIG. 13 is a flowchart showing exhaust start time period setting processing.

### DETAILED DESCRIPTION OF EXEMPLARY EMBODIMENTS

An embodiment of the present disclosure will be described below with reference to the drawings.

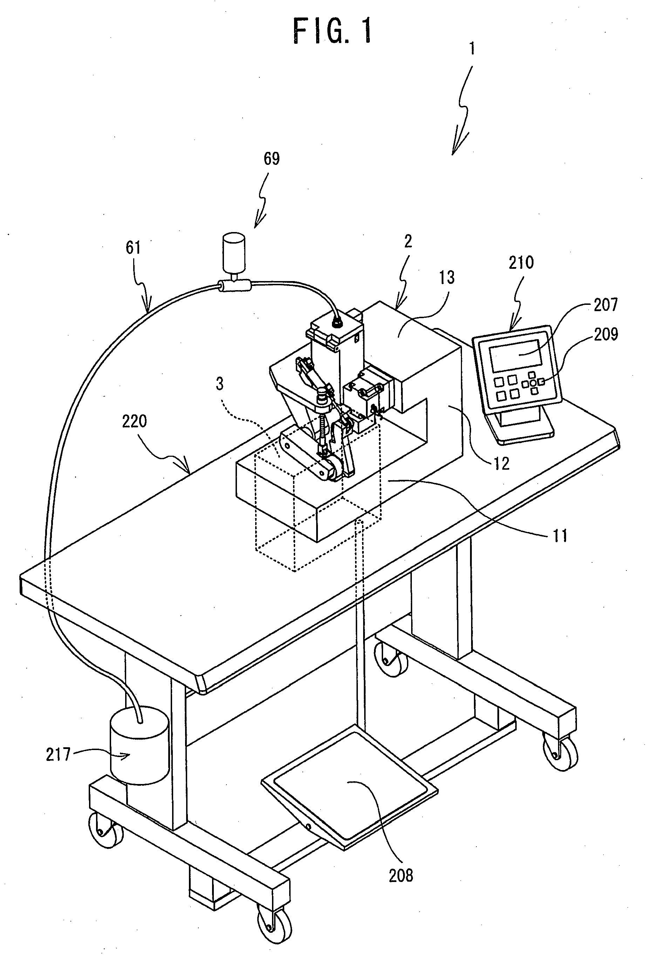

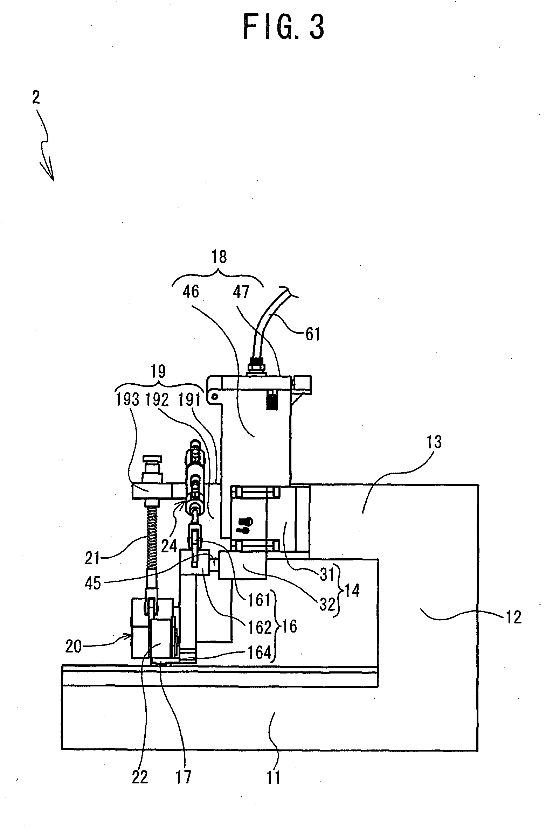

A configuration of a cloth bonding apparatus 1 will be described with reference to FIG. 1 to FIG. 4. The upper side, the lower side, the right side, the left side, the front side and the back side of FIG. 3 respectively correspond to the upper side, the lower side, the right side, the left side, the front side and the rear side of a bonding device 2.

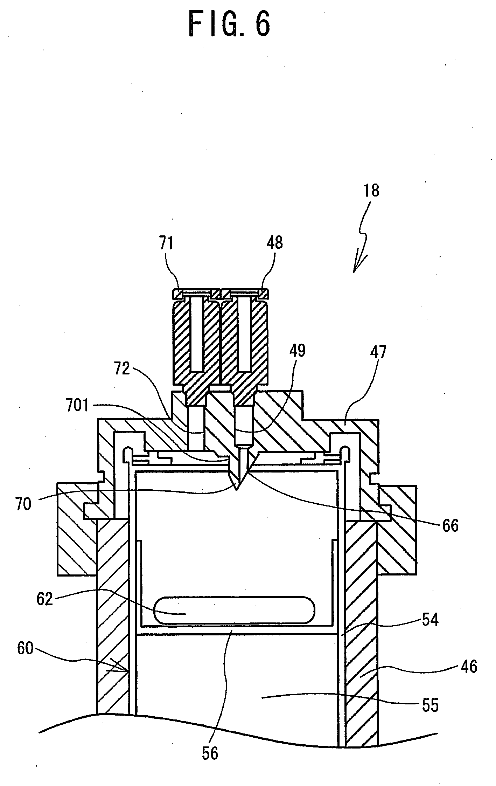

An overall configuration of the cloth bonding apparatus 1 will be described with reference to FIG. 1. As shown in FIG. 1, the cloth bonding apparatus 1 is provided with the bonding device 2, a control box 3, an operation panel 210 and a pedal 208. The bonding device 2 is fixed to a work table 220. The bonding device 2 attaches an adhesive 55 (refer to FIG. 6) between two layers of cloth that are arranged facing each other, and then presses and feeds the cloth. The two layers of cloth are bonded to each other by undergoing the above-described operation of the bonding device 2.

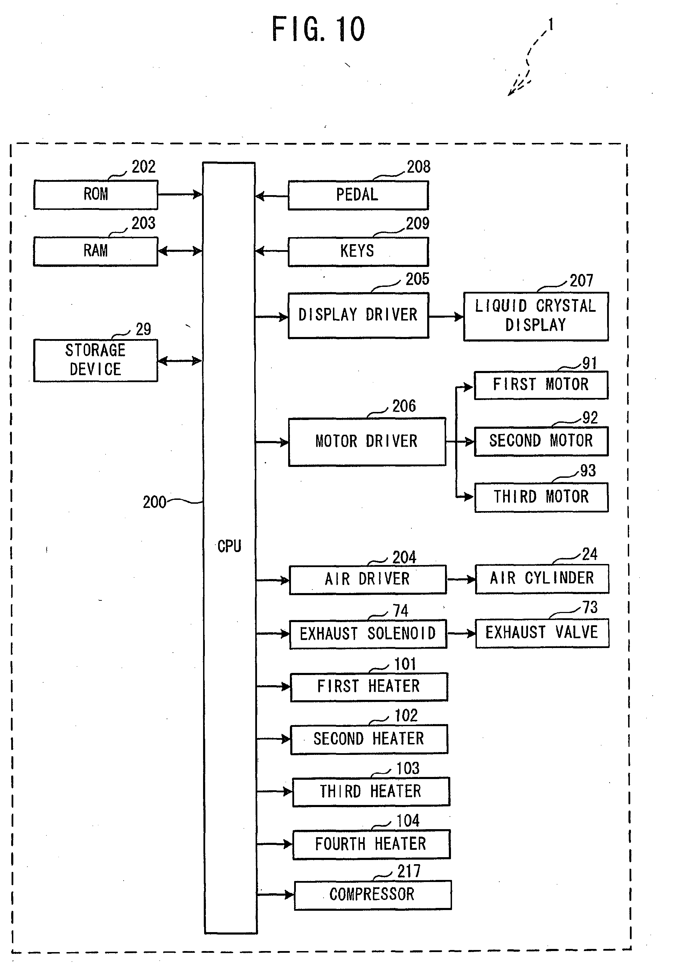

The control box 3 is fixed below the work table 220. The control box 3 stores a control board on which is mounted a CPU 201 (refer to FIG. 10) and the like. The control box 3 is electrically connected to the bonding device 2, the operation panel 210 and the pedal 208. The operation panel 210 is provided on the right side of the bonding device 2. The operation panel 210 is provided with a liquid crystal display portion 207 that displays a variety of information, and keys 209 that receive various input settings by an operator. The pedal 208 is provided below the control box 3 and is used to adjust a feeding speed of the cloth.

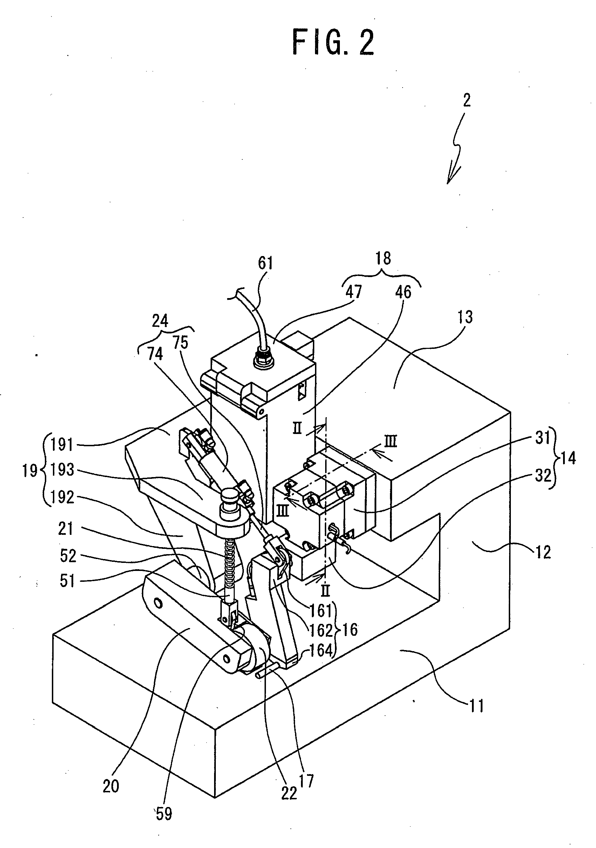

A compressor 217 is disposed below and on the left side of the work table 220. The compressor 217 and the bonding device 2 are connected by a hose 61. An end portion of the hose 61 on the bonding device 2 side is connected to a lid portion 47 (refer to FIG. 2) of a storage chamber 18. The hose 61 includes a valve 69, the inside of which can be opened and closed. The compressor 217 supplies pressurized gas to the bonding device 2 via the hose 61. The valve 69 controls circulation of the gas that is supplied by the compressor 217 into the storage chamber 18, and switches to one of an open state and a closed state.

A configuration of the bonding device 2 will be described with reference to FIG. 2 to FIG. 4. As shown in FIG. 2 and FIG. 3, the bonding device 2 is provided with a bed portion 11, a pillar portion 12 and an arm portion 13. The bed portion 11 has a substantially cuboid shape. The pillar portion 12 extends vertically from the right end of the bed portion 11. The arm portion 13 is connected to the upper end of the pillar portion 12, and projects toward the left from a left side face of the pillar portion 12.

As shown in FIG. 2, a left end portion of the arm portion 13 supports a pump casing 14, the storage chamber 18 and a beam portion 19, in that order starting from the front.

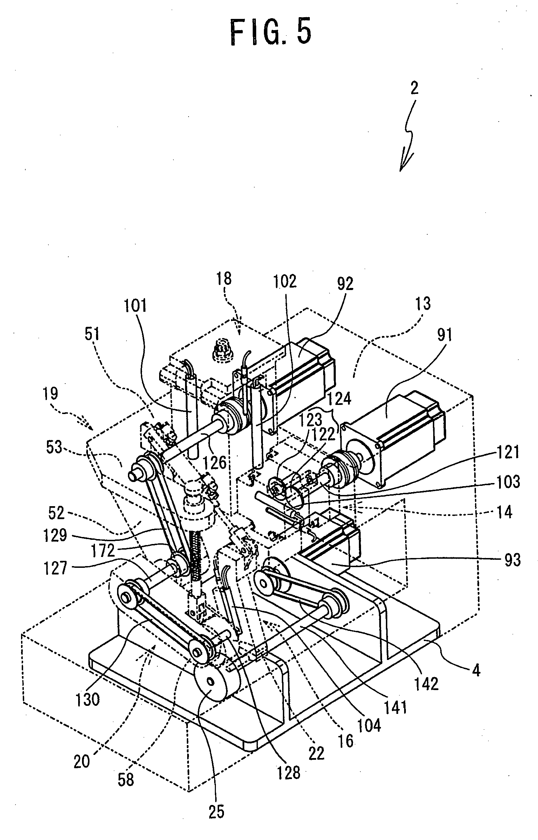

The pump casing 14 will be described. As shown in FIG. 2 and FIG. 3, the pump casing 14 is provided with a first pump casing 31 and a second pump casing 32. The first pump casing 31 has a substantially cubic shape. The first pump casing 31 is fixed to the left side face of the arm portion 13. A gear pump 124 (refer to FIG. 5) and the like are provided inside the first pump casing 31. The gear pump 124 supplies an appropriate amount of the adhesive 55 (refer to FIG. 6) to a nozzle 17 at a high level of accuracy. The second pump casing 32 is a member having a substantially cuboid shape. The second pump casing 32 extends downward from a lower left end face of the first pump casing 31.

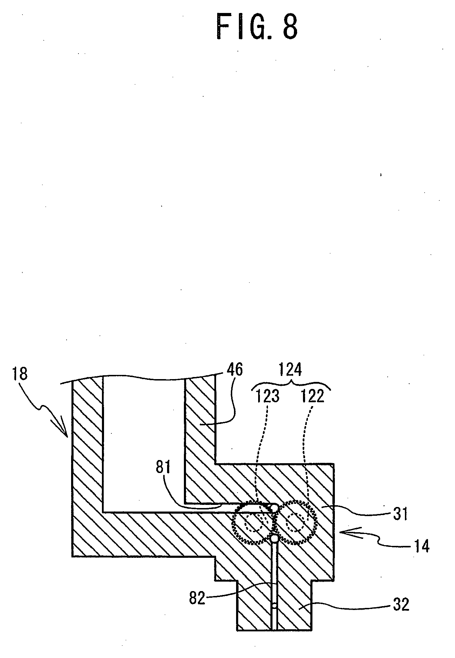

An shaft portion 45 (refer to FIG. 3) is provided on the left side of the second pump casing 32. The shaft portion 45 is connected to the right side of an upper edge portion 162 of a support portion 16 such that the support portion 16 is swingably supported around the shaft portion 45. The pump casing 14 is provided with a supply passage 81 (refer to FIG. 8) and a supply passage 82 (refer to FIG. 8). The supply passage 81 feeds the adhesive 55 from the storage chamber 18 to the gear pump 124. The supply passage 82 feeds the adhesive 55 from the gear pump 124 to the support portion 16.

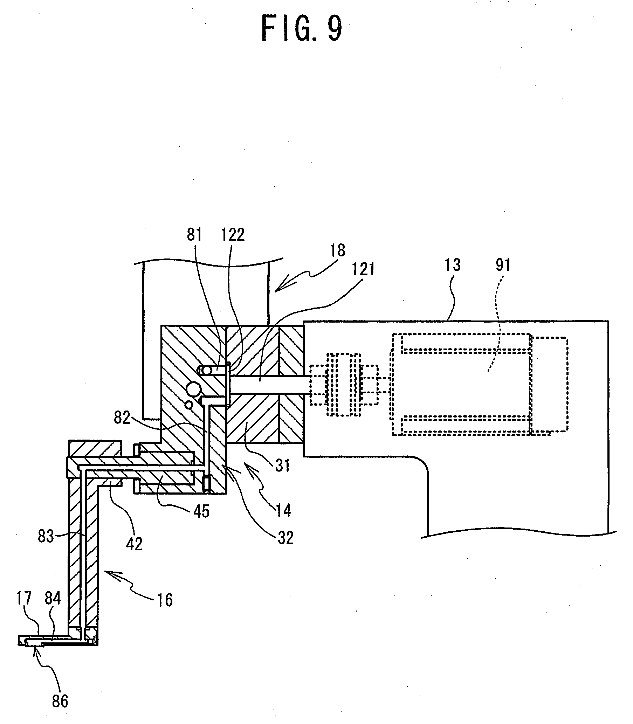

As shown in FIG. 2 and FIG. 3, the support portion 16 has a substantially cuboid shape. A slight gap is provided between a lower edge portion 164 of the support portion 16 and the bed portion 11. A supply passage 83 (refer to FIG. 9) is provided inside the support portion 16. The supply passage 83 supplies the adhesive 55 from the pump casing 14 to the nozzle 17. The nozzle 17 is provided on the lower edge portion 164 of the support portion 16. The nozzle 17 extends from the support portion 16 to the left side along the cloth, and the nozzle 17 includes a supply passage 84 (refer to FIG. 9) therein. The supply passage 84 is communicatively connected to the supply passage 83. A drive transmission portion 161 is provided on the upper edge portion 162 of the support portion 16. The drive transmission portion 161 supports a leading end portion of a movable portion 75 of an air cylinder 24.

The nozzle 17 is cylindrically shaped. A discharge opening 86 (refer to FIG. 9), which discharges the adhesive 55, is provided on the lower side of the nozzle 17. When the operator performs a cloth bonding operation, the discharge opening 86 faces the bed portion 11. When the bonding operation is performed, the operator inserts the nozzle 17 between two layers of cloth that are arranged facing each other. The gear pump 124 (refer to FIG. 5) supplies the adhesive 55 to the nozzle 17 via the supply passage 83 inside the support portion 16. The nozzle 17 discharges the adhesive 55 onto the cloth from the discharge opening 86. The adhesive 55 attaches to the surface of the cloth that is positioned underneath the nozzle 17.

As shown in FIG. 2 and FIG. 3, the storage chamber 18 has a substantially cuboid shape. The storage chamber 18 extends upward from the left side of the arm portion 13 and a rear side portion of the pump casing 14. The storage chamber 18 is provided with a main body 46 and the lid portion 47. The main body 46 has a bottomed tubular shape, of which an upper portion is open. The lid portion 47 covers the upper portion opening of the main body 46. The storage chamber 18 stores the thermal melting adhesive 55 in the main body 46. The cloth bonding apparatus 1 supplies the adhesive 55 stored in the storage chamber 18 to the gear pump 124 and the nozzle 17 as necessary. The thermal melting adhesive 55 liquefies when it is heated to a predetermined temperature, and it solidifies at a temperature lower than the predetermined temperature.

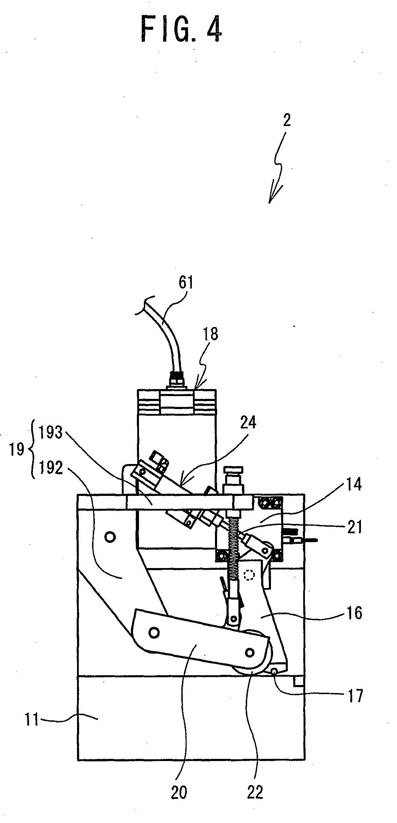

As shown in FIG. 2, the beam portion 19 is provided with a body portion 191, a spring support portion 193 and a column portion 192. The body portion 191 extends in a horizontal direction to the left from a left rear end portion of the arm portion 13. The spring support portion 193 is plate-shaped and extends in the horizontal direction toward the front from a left end portion of the body portion 191. As shown in FIG. 2 and FIG. 4, the column portion 192 extends diagonally downward toward the front from the body portion 191, at an angle of approximately 45 degrees from the horizontal plane. A lower end portion of the column portion 192 is separated from the bed portion 11.

As shown in FIG. 2, the spring support portion 193 has a hole in its front end portion. The spring support portion 193 supports a shaft portion 51 such that the shaft portion 51 can move up and down. The shaft portion 51 is inserted through a spring 21. An upper end portion of the shaft portion 51 is inserted through the hole in the spring support portion 193. The column portion 192 includes a shaft portion 52 that extends in the horizontal direction to the left from a lower end portion of the column portion 192. The shaft portion 52 supports a rear end portion of a roller holding portion 20. The roller holding portion 20 pivots around the shaft portion 52 such that a front end portion of the roller holding portion 20 moves in the up-down direction. The body portion 191 includes the air cylinder 24 on the right side of the spring support portion 193. The air cylinder 24 switches a position of the support portion 16.

An internal configuration of the bonding device 2 will be described with reference to FIG. 5. The bonding device 2 is provided with a first motor 91, a second motor 92, a third motor 93 and the like in its interior.

The first motor 91 drives the gear pump 124 by transmitting a rotational driving force to the gear pump 124 via a rotating shaft 121. The gear pump 124 is provided with a drive gear 122 and a driven gear 123. The drive gear 122 is fixed to a left end portion of the rotating shaft 121. The drive gear 122 rotates along with the rotating shaft 121. The driven gear 123 meshes with the drive gear 122. The first motor 91 is positioned inside the arm portion 13 and on the right side of a portion where the pump casing 14 is connected to the arm portion 13. The rotating shaft 121 extends, inside the pump casing 14, to the left from a rotating shaft of the first motor 91. The drive gear 122 and the driven gear 123 supply an appropriate amount of the adhesive 55 (refer to FIG. 6) to the nozzle 17.

The second motor 92 drives an upper feed roller 22 by transmitting a rotational driving force to the upper feed roller 22 via a rotating shaft 126, a rotating shaft 127, a rotating shaft 128, a belt 129 and a belt 130. The second motor 92 is positioned inside the arm portion 13 and on the right side of a portion where the beam portion 19 is connected to the arm portion 13.

The rotating shaft 126 extends to the left from a rotating shaft of the second motor 92, and penetrates inside the body portion 191. A left end portion of the rotating shaft 126 is positioned inside the column portion 192. The left end portion of the rotating shaft 126 supports a pulley. A right end portion of the rotating shaft 127 extends into the lower end portion of the column portion 192. A left end portion of the rotating shaft 127 extends into the rear end portion of the roller holding portion 20. The right end portion and the left end portion of the rotating shaft 127 respectively support pulleys. The rotating shaft 128 is a rotating shaft of the upper feed roller 22. A left end portion of the rotating shaft 128 extends into the front end portion of the roller holding portion 20, and supports a pulley. A right end portion of the rotating shaft 128 projects from the front end portion of the roller holding portion 20, and supports the upper feed roller 22. The belt 129 is stretched between the pulley of the left end portion of the rotating shaft 126 and the pulley of the right end portion of the rotating shaft 127 inside the column portion 192. The belt 130 is stretched between the pulley of the left end portion of the rotating shaft 127 and the pulley of the left end portion of the rotating shaft 128 inside the roller holding portion 20. The upper feed roller 22 rotates due to the rotation of the second motor 92.

The third motor 93 drives a lower feed roller 25 by transmitting a rotational driving force to the lower feed roller 25 via a rotating shaft 141 and a belt 142. The lower feed roller 25 is cylindrically shaped and is fixed to the rotating shaft 141. The lower feed roller 25 is positioned below the upper feed roller 22 and inside the bed portion 11. A support bed 4 is provided inside the bed portion 11. The support bed 4 rotatably supports the rotating shaft 141. The belt 142 is stretched between a pulley of a rotating shaft of the third motor 93 and a pulley of the right end of the rotating shaft 141 inside the bed portion 11. The lower feed roller 25 rotates due to the rotation of the motor 93.

The main body 46 of the storage chamber 18 is provided with a first heater 101 and a second heater 102. The first heater 101 and the second heater 102 heat the main body 46 so that the adhesive 55 stored in the main body 46 is heated. The bonding device 2 heats the thermal melting adhesive 55 to the predetermined temperature in the storage chamber 18, using the first heater 101 and the second heater 102, so that the adhesive 55 is liquefied.

A third heater 103 is provided inside the first pump casing 31 of the pump casing 14. The third heater 103 heats the first pump casing 31 so as to heat the adhesive 55 flowing inside the first pump casing 31. A fourth heater 104 is provided inside the support portion 16. The fourth heater 104 heats the support portion 16 so as to heat the adhesive 55 flowing inside the support portion 16.

The storage chamber 18 and a cartridge 60 will be described with reference to FIG. 6. The storage chamber 18 houses the cartridge 60, which is filled with the adhesive 55, in the main body 46. The lid portion 47 is made of iron and it is attached by being screwed into the main body 46. The lid portion 47 covers the upper portion opening of the main body 46. The inside of the main body 46 is sealed in a state in which the lid portion 47 covers the upper portion opening (namely, in a state in which the lid portion 47 is closed). The operator removes the lid portion 47 from the main body 46 to insert and remove the cartridge 60.

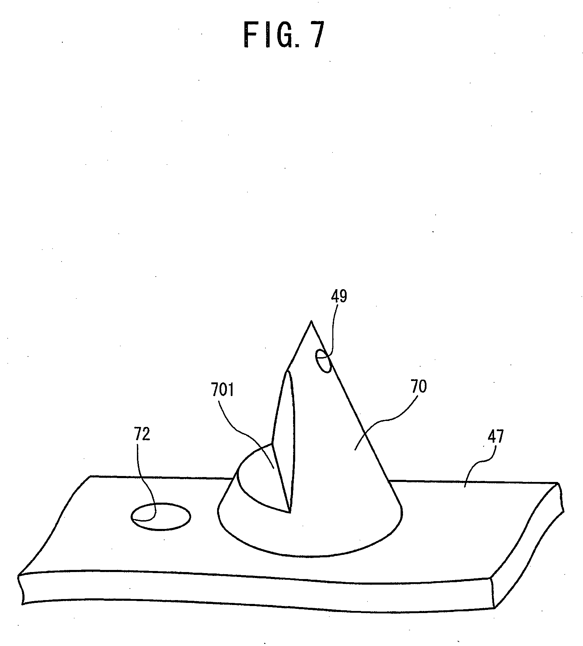

A gas supply port 49 is provided in a central portion of the lid portion 47. The gas supply port 49 is a hole that penetrates the lid portion 47 in the up-down direction. The lid portion 47 is provided with an intake pipe 48 that is connected to the gas supply port 49. A needle portion 70 is provided on a lower end portion of the lid portion 47. The needle portion 70 has a shape in which a leading end portion on the lower side is sharp. As shown in FIG. 7, a cut-out portion 701 is provided in the outer periphery of the needle portion 70. The cut-out portion 701 extends from the vicinity of the leading end of the needle portion 70 toward the lower surface side of the lid portion 47. The gas supply port 49 passes through the inside of the needle portion 70 and extends to the vicinity of the leading end of the needle portion 70. The gas supply port 49 allows the gas supplied by the compressor 217 (refer to FIG. 1) to flow into the cartridge 60. The cut-out portion 701 can discharge the gas inside the cartridge 60 to the outside of the cartridge 60.

The lid portion 47 is provided with a gas discharge port 72 on the left side of the gas supply port 49 (refer to FIG. 6). The gas discharge port 72 is a hole that passes through an upper surface and a lower surface of the lid portion 47. A passage diameter of the gas discharge port 72 is substantially the same as a passage diameter of the gas supply port 49. The lid portion 47 is provided with an exhaust pipe 71 that is connected to the gas discharge port 72. The exhaust pipe 71 is connected to an exhaust valve 73 (refer to FIG. 10) via a hose (not shown in the drawings). The exhaust valve 73 can be opened and closed by driving an exhaust solenoid 74. When the exhaust solenoid 74 opens the exhaust valve 73, the storage chamber 18 discharges the gas inside the main body 46 to the outside of the storage chamber 18 via the gas discharge port 72. When the lid portion 47 of the storage chamber 18 is closed and the exhaust valve 73 is in a closed state, gas is filled inside the storage chamber 18 and a pressure is generated that pushes the adhesive 55 in the cartridge 60 downward.

The cartridge 60 is provided with a main body 54 and an inner lid 56 that are made of aluminum. The main body 54 has a substantially cylindrical shape. The adhesive 55 is filled inside the main body 54. When the lid portion 47 is closed, an upper surface of the main body 54 comes into contact with the lid portion 47.

The inner lid 56 is provided inside the main body 54. The inner lid 56 can move downward in the main body 54, and comes into contact with an upper surface of the adhesive 55. By moving downward, the inner lid 56 can apply a downward pressure on the adhesive 55. A silica gel 62 is provided on the upper surface of the inner lid 56. The silica gel 62 is a desiccant that inhibits the adhesive 55 from being solidified by contact with gas that contains water in the cartridge 60. The silica gel 62 adsorbs water in the main body 54.

The sharp leading end portion of the needle portion 70 of the lid portion 47 opens a hole 66 in an upper wall of the main body 54. The compressor 217 (refer to FIG. 1) feeds gas into the main body 54 via the hose 61 (refer to FIG. 1), the intake pipe 48 and the gas supply port 49. The gas pushes the inner lid 56 downward. The inner lid 56 pushes the adhesive 55 downward.

With reference to FIG. 8 and FIG. 9, the flow of the adhesive 55 (refer to FIG. 6) will be described. The adhesive 55 flows from the storage chamber 18 via the pump casing 14 and the support portion 16 to the discharge opening 86 of the nozzle 17. The first heater 101 (refer to FIG. 5) and the second heater 102 (refer to FIG. 5) heat the adhesive 55 in the storage chamber 18. The adhesive 55 liquefies. The adhesive 55 in a liquefied state flows from the lower side of the cartridge 60 to the supply passage 81. When the operator depresses the pedal 208 (refer to FIG. 1), the first motor 91 drives the drive gear 122. The drive gear 122 and the driven gear 123 rotate. The gear pump 124 feeds the adhesive 55 in the liquefied state from the supply passage 81 toward the supply passage 82. The third heater 103 (refer to FIG. 5) heats the adhesive 55 flowing through the supply passages 81 and 82. The adhesive 55 maintains the liquefied state.

The adhesive 55 flows from the supply passage 82 toward the supply passage 83, reaches the supply passage 84, and is discharged from the discharge opening 86 to the outside. The fourth heater 104 (refer to FIG. 5) heats the adhesive 55 flowing through the supply passage 83. The adhesive 55 in the liquefied state is discharged from the discharge opening 86 to the outside.

An electrical configuration of the cloth bonding apparatus 1 will be described with reference to FIG. 10. The cloth bonding apparatus 1 is provided with the CPU 201, a ROM 202, a RAM 203 and a storage device 29. The CPU 201 performs reception processing and control processing. The reception processing is processing that receives input information from an input device including the keys 209 and the pedal 208. The reception processing is also processing that receives detection information detected by various types of sensors. The control processing is processing that controls the motors, the heaters and the like.

The ROM 202 stores programs executed by the CPU 201 and various initial setting parameters etc. The RAM 203 temporarily stores data including a timer value, a counter value, flags and so on. The storage device 29 stores various setting information input by the operator. The CPU 201 is electrically connected to each of the ROM 202, the RAM 203 and the storage device 29, and can access each of their storage areas.

The pedal 208 is electrically connected to the CPU 201. The CPU 201 recognizes an amount of depression of the pedal 208. The CPU 201 determines rotational speeds of the upper feed roller 22 and the lower feed roller 25 and a rotational speed of the drive gear 122, based on the recognized amount of depression of the pedal 208.

The keys 209 are electrically connected to the CPU 201. The operator uses the keys 209 when performing various operation settings. The CPU 201 recognizes a state of depression of the keys 209. The CPU 201 stores information of the various operation settings in the storage device 29, based on the recognized state of depression of the keys 209.

The first to fourth heaters 101 to 104 are each electrically connected to the CPU 201. The CPU 201 controls ON/OFF of each of the first to fourth heaters 101 to 104. The CPU 201 is electrically connected to the compressor 217. The CPU 201 controls ON/OFF of the compressor 217.

A display driver 205 is electrically connected to the CPU 201. The display driver 205 is electrically connected to the liquid crystal display portion 207. The CPU 201 displays a desired image on the liquid crystal display portion 207 via the display driver 205.

A motor driver 206 is electrically connected to the CPU 201. The first to third motors 91 to 93 are each electrically connected to the motor driver 206. The CPU 201 controls each of the first to third motors 91 to 93 via the motor driver 206.

An air driver 204 is electrically connected to the CPU 201. The air driver 204 is electrically connected to the air cylinder 24. The CPU 201 controls a pressure of air fed into an air inlet of the air cylinder 24 via the air driver 204.

The exhaust solenoid 74 is electrically connected to the CPU 201. The exhaust valve 73 is electrically connected to the exhaust solenoid 74. The CPU 201 controls opening/closing of the exhaust valve 73 by supplying a drive voltage to the exhaust solenoid 74.

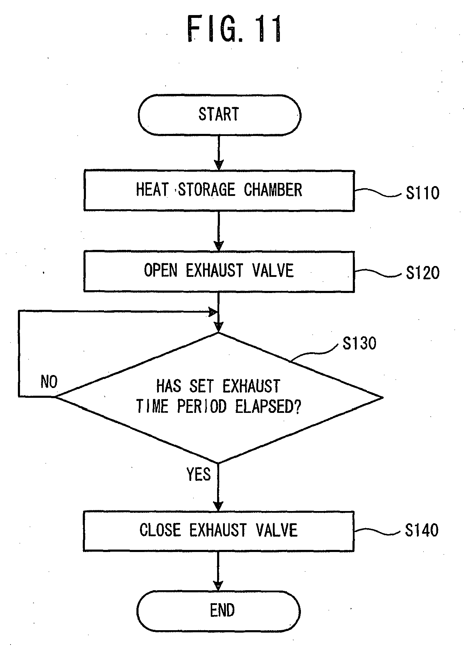

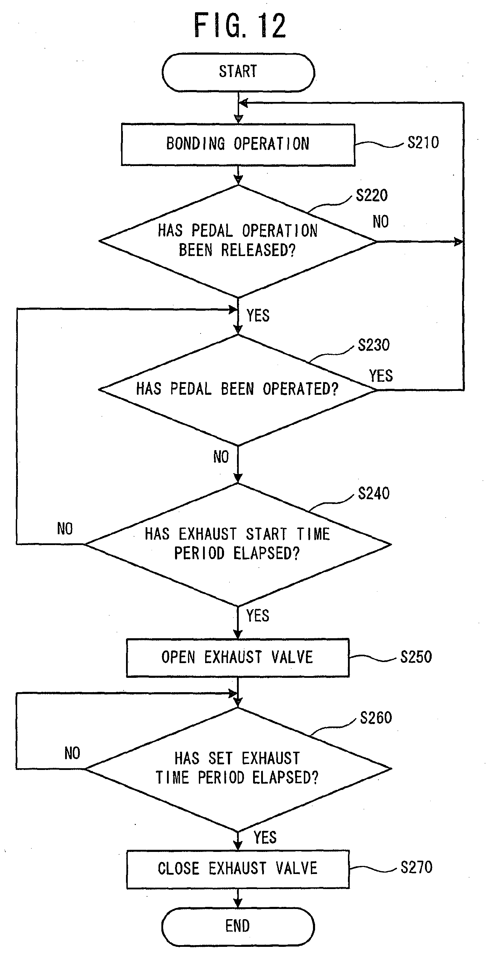

Exhaust control processing of the cloth bonding apparatus 1 will be described with reference to FIG. 11 and FIG. 12. The reference numerals Si (i = 110, 120...) in the figures indicate respective steps. The exhaust control processing includes a first exhaust processing executed when a power source of the cloth bonding apparatus 1 is turned on, and a second exhaust processing executed when the operator performs a bonding operation.

As shown in FIG. 11, the first exhaust control processing executed is started when the power source of the cloth bonding apparatus 1 is turned on. When the power source is turned on, the CPU 201 starts to drive the compressor 217 and supplies compressed gas into the cartridge 60 of the storage chamber 18. The CPU 201 turns on the first heater 101 and the second heater 102 to heat the main body 46 of the storage chamber 18 (step S110). The adhesive 55 in the storage chamber 18 liquefies at the predetermined temperature.

The CPU 201 supplies a drive voltage to the exhaust solenoid 74 and thereby opens the exhaust valve 73 (step S120). When the exhaust valve 73 is opened, the gas discharge port 72 discharges compressed gas filled in the main body 46 to the outside of the storage chamber 18, the compressed gas being fed from the cartridge 60 through the cut-out portion 701 into the main body 46. When the power source is turned on, the gas discharge port 72 discharges gas containing water that remains in the cartridge 60 to the outside of the cartridge 60. The CPU 201 activates a timer at the same time as the opening of the exhaust valve 73. The CPU 201 determines whether a set exhaust time period has elapsed (step S130). The set exhaust time period is a time period during which the exhaust valve 73 is opened. The storage device 29 stores the set exhaust time period. When the set exhaust time period has not elapsed (no at step S130), the CPU 201 repeats the processing at step S130.

When the set exhaust time period has elapsed (yes at step S130), the CPU 201 stops the supply of the drive voltage to the exhaust solenoid 74 and thereby closes the exhaust valve 73 (step S 140). The CPU 201 ends the processing.

As shown in FIG. 12, the second exhaust control processing executed is started when the operator depresses the pedal 208. The CPU 201 performs the bonding operation (step S210). The bonding operation includes the following operations: the CPU 201 performs drive control of the first to third motors 91 to 93 in accordance with the amount of depression of the pedal 208, the adhesive 55 (refer to FIG. 6) is supplied from the storage chamber 18 via the supply passages 81 to 84 to the nozzle 17 and is discharged from the nozzle 17 onto a cloth, and the cloth is pressed and fed.

The CPU 201 determines whether the operator has released the operation of the pedal 208 (step S220). When the operator has not released the operation of the pedal 208 (no at step S220), the CPU 201 returns the processing to step S210 and the bonding operation is continued.

When the operator has released the operation of the pedal 208 (yes at step S220), the CPU 201 activates the timer and determines whether the operator has operated the pedal 208 (step S230). When the operator has operated the pedal 208 (yes at step S230), the CPU201 returns the processing to step S210 and performs the bonding operation.

When the operator has not operated the pedal 208 (no at step S230), the CPU 201 determines whether an exhaust start time period has elapsed (step S240). The exhaust start time period is a time period from when the operator releases the operation of the pedal 208 to when the exhaust valve 73 is opened. The storage device 29 stores the exhaust start time period. When the exhaust start time period has not elapsed (no at step S240), the CPU 201 returns the processing to step S230.

When the exhaust start time period has elapsed (yes at step S240), the CPU 201 supplies a drive voltage to the exhaust solenoid 74 and thereby opens the exhaust valve 73 (step S250). When the exhaust valve 73 is opened, the gas discharge port 72 discharges compressed gas filled in the main body 46 to the outside of the storage chamber 18, the compressed gas being fed from the cartridge 60 through the cut-out portion 701 into the main body 46. The CPU 201 activates the timer at the same time as the opening of the exhaust valve 73. The CPU 201 determines whether the set exhaust time period has elapsed (step S260). When the set exhaust time period has not elapsed (no at step S260), the CPU 201 repeats the processing at step S260.

When the set exhaust time period has elapsed (yes at step S260), the CPU 201 stops the supply of the drive voltage to the exhaust solenoid 74 and thereby closes the exhaust valve 73 (step S270). The CPU 201 ends the processing.

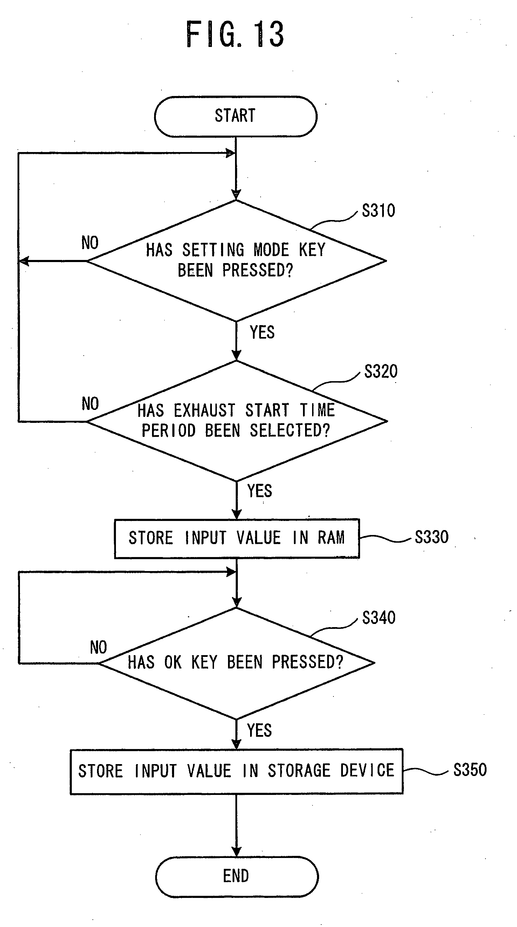

Exhaust start time period setting processing will be described with reference to FIG. 13. The CPU 201 determines whether the operator has pressed a setting mode key (a predetermined key of the keys 209) of the cloth bonding apparatus 1 (step S310). When the operator has not pressed the setting mode key (no at step S310), the CPU 201 returns the processing to step S310. The CPU 201 continues to monitor the pressing of the setting mode key.

When the operator has pressed the setting mode key (yes at step S310), the CPU 201 determines whether the operator has operated the keys 209 and selected an input menu of the exhaust start time period, among input menus of various types of setting information (step S320). When the operator has selected an input menu other than the exhaust start time period (no at step S320), the CPU 201 returns the processing to step S310.

When the operator has selected the input menu of the exhaust start time period (yes at step S320), the CPU 201 temporarily stores, in the RAM 203, an input value of the exhaust start time period input by the operator via the keys 209 (step S330). The CPU 201 determines whether the operator has selected an OK key to confirm the input exhaust start time period (step S340). When the operator has not selected the OK key (no at step S340), the CPU 201 repeats the processing at step S340 and waits until the operator has selected the OK key. When the operator has selected the OK key (yes at step S340), the CPU 201 stores, in the storage device 29, the exhaust start time period stored in the RAM 203 at step S330 (step S350). The CPU 201 ends the processing.

As described above, in the present embodiment, the cloth bonding apparatus 1 includes the gas discharge port 72 in the lid portion 47 of the storage chamber 18. The gas discharge port 72 discharges the gas containing water in the cartridge 60 to the outside of the storage chamber 18. Therefore, the cloth bonding apparatus 1 can inhibit the lid portion 47 etc. made of iron from rusting.

The lid portion 47 is provided with the exhaust pipe 71 that is connected to the gas discharge port 72. The exhaust pipe 71 is connected to the exhaust valve 73 via the hose (not shown in the drawings). The CPU 201 performs drive control of the exhaust solenoid 74 and thereby opens and closes the exhaust valve 73. It is therefore possible to inhibit the gas discharge port 72 from being constantly opened. Therefore, the cloth bonding apparatus 1 can exchange the gas in the storage chamber 18 and can inhibit the gas containing water from accumulating in the storage chamber 18.

When it is determined that the operator has not operated the pedal 208, the CPU 201 determines whether a time period during which the pedal 208 is stopped has reached the exhaust start time period. When the time period during which the pedal 208 is stopped has reached the exhaust start time period, the CPU 201 supplies a drive voltage to the exhaust solenoid 74 and thereby opens the exhaust valve 73. Therefore, when the time period during which the bonding operation is stopped is shorter than the set time period, the cloth bonding apparatus 1 can inhibit the exhaust valve 73 from switching to the open state. When the operator re-starts the bonding operation, the cloth bonding apparatus 1 can easily supply the adhesive 55 in the storage chamber 18 to the nozzle 17.

After the main body 46 of the storage chamber 18 is heated by turning on the first heater 101 and the second heater 102, the CPU 201 supplies a drive voltage to the exhaust solenoid 74 and thereby opens the exhaust valve 73. The water adsorbed by the silica gel 62 due to the heating of the main body 46 changes to vapor, and is filled in the storage chamber 18. However, the cloth bonding apparatus 1 can discharge the vapor to the outside of the storage chamber 18. Therefore, the cloth bonding apparatus 1 can inhibit the lid portion 47 etc. made of iron from rusting.

The compressor 217 corresponds to a "pressure source" of the present disclosure. The exhaust valve 73 corresponds to a "discharge valve" of the present disclosure. The CPU 201 that performs the processing at step S120, step S140, step S250 and step S270 corresponds to a "discharge valve control portion" of the present disclosure. The supply passages 81 to 84, the first motor 91, the drive gear 122, the driven gear 123 and the gear pump 124 correspond to a "supply portion" of the present disclosure. The CPU 201 that performs the processing at step S210 corresponds to a "supply control portion" of the present disclosure. The pedal 208 corresponds to an "input portion" of the present disclosure. The CPU 201 that performs the processing at step S230 corresponds to a "measurement portion" of the present disclosure. The keys 209 and the CPU 201 that performs the exhaust start time period setting processing correspond to a "time setting portion" of the present disclosure. The first heater 101 and the second heater 102 correspond to a "heating portion" of the present disclosure. The CPU 201 that performs the processing at step S110 corresponds to a "heating control portion" of the present disclosure. The silica gel 62 corresponds to a "desiccant" of the present disclosure.

The present disclosure is not limited to the above-described embodiment and various changes can be made. The lid portion 47 may include the gas discharge port 72 on the right side of the gas supply port 49. The gas discharge port 72 may be provided in the central portion of the lid portion 47.

The passage diameter of the gas discharge port 72 may be different from that of the gas supply port 49. When the passage diameter of the gas discharge port 72 is smaller than that of the gas supply port 49, a gas supply rate is higher than a gas discharge rate. Therefore, even when the cloth bonding apparatus 1 is not provided with the exhaust valve 73, downward pressure can be applied to the adhesive 55 in the cartridge 60. More specifically, the cloth bonding apparatus 1 can gradually discharge the gas in the storage chamber 18 or the cartridge 60 while applying downward pressure.

The exhaust valve 73 may be opened and closed by the air cylinder 24. The exhaust valve 73 may be a cock or the like that can be opened and closed by a manual operation by the operator.

When a pressure source is provided in a factory in which the cloth bonding apparatus 1 is installed, the compressor 217 is not required for the cloth bonding apparatus 1. When the cloth bonding apparatus 1 uses the pressure source of the factory, the hose 61 can be connected to the pressure source. In this case, the cloth bonding apparatus 1 can switch between supply and stop of pressure gas by opening and closing the valve 69.

The cloth bonding apparatus 1 may be adapted such that the set exhaust time period can be set similarly to the setting of the exhaust start time period.

## Claims

1. A cloth bonding apparatus (1), comprising:
a storage chamber (18) which has an opening and which is adapted to store an adhesive (55) ;
a lid portion (47) which is provided on the opening of the storage chamber and which is capable of opening and closing the opening;
a gas supply port (49) which is provided in the lid portion and which is adapted to supply gas into the storage chamber;
a pressure source (217) which is adapted to supply the gas through the gas supply port into the storage chamber, thereby extruding the adhesive in the storage chamber,
**characterized by**
a gas discharge port (72) which is adapted to discharge the gas in the storage chamber to an outside of the storage chamber;
a discharge valve (73) which is adapted to open and close the gas discharge port, and which discharges the gas in the storage chamber to the outside of the storage chamber by opening the gas discharge port; and
a discharge valve control portion (201) which controls switching between opening and closing of the discharge valve.

2. The cloth bonding apparatus according to claim 1, further comprising:
a nozzle (17) which has an adhesive discharge opening (86) through which the adhesive is dischargeable;
a supply portion (81 to 84, 91, 122, 123, 124) which, in case where the pressure source supplies the gas through the gas supply port into the storage chamber, is adapted to supply the nozzle with the adhesive extruded from the storage chamber; and
a supply control portion (201) which controls driving of the supply portion, wherein
the discharge valve control portion switches the discharge valve to an open state in case where the supply control portion stops supply of the adhesive by the supply portion.

3. The cloth bonding apparatus according to claim 2, further comprising:
an input portion (208) which starts and stops the driving of the supply portion by the supply control portion;
a measurement portion (201) which measures an elapsed time from when the input portion stops the driving of the supply portion by the supply control portion; and
a time setting portion (201) which sets a time period from when the input portion stops the driving of the supply portion by the supply control portion to when the discharge valve control portion switches the discharge valve to the open state, wherein
the discharge valve control portion switches the discharge valve to the open state in case where the elapsed time has reached the time period set by the time setting portion.

4. The cloth bonding apparatus according to any one of claims 1 through 3, further comprising:
a heating portion (101, 102) which is adapted to heat the adhesive in the storage chamber; and
a heating control portion (201) which controls driving of the heating portion, wherein
the discharge valve control portion switches the discharge valve to the open state in case where the heating portion has heated the adhesive in the storage chamber to a predetermined temperature in accordance with control by the heating control portion.

5. The cloth bonding apparatus according to any one of claims 1 through 4, wherein:
the storage chamber is adapted to detachably house a cartridge (60) which stores the adhesive;
the cartridge is adapted to include a desiccant (62) which adsorbs water in the cartridge;
the gas supply port is adapted to supply the gas from the pressure source into the cartridge; and
the gas discharge port is adapted to discharge the gas in the cartridge to the outside of the storage chamber.

6. The cloth bonding apparatus according to claim 5, wherein:
the lid portion includes the gas discharge port and a needle portion (70) which is adapted to form a hole (66) in the cartridge, the hole being used to supply the gas from the pressure source into the cartridge;
the needle portion includes a cut-out portion (701) in an outer periphery, the cut-out portion being adapted to discharge the gas in the cartridge to the outside of the cartridge; and
the gas supply port passes through an internal portion of the needle portion.

## Patentansprüche

1. Tuchfügegerät (1) mit:
einer Speicherkammer (18), die eine Öffnung hat und die dazu angepasst ist, ein Klebemittel (55) zu speichern;
einem Deckelabschnitt (47), der an der Öffnung der Speicherkammer vorgesehen ist und der die Öffnung öffnen und schließen kann;
einem Gaszuführanschluss (49), der in dem Deckelabschnitt vorgesehen ist und dazu angepasst ist, ein Gas in die Speicherkammer zuzuführen;
einer Druckquelle (217), die dazu angepasst ist, das Gas durch den Gaszuführanschluss in die Speicherkammer zuzuführen, wodurch das Klebemittel in der Speicherkammer extrudiert wird,
**gekennzeichnet durch**
einen Gasauslassanschluss (72), der dazu angepasst ist, das Gas in der Speicherkammer zu einer Außenseite der Speicherkammer auszulassen;
ein Auslassventil (73), das dazu angepasst ist, den Gasauslassanschluss zu öffnen und zu schließen, und das das Gas in der Speicherkammer zu der Außenseite der Speicherkammer durch Öffnen des Gasauslassanschlusses auslässt; und
einen Auslassventilsteuerabschnitt (201), der das Schalten zwischen dem Öffnen und Schließen des Auslassventils steuert.

2. Tuchfügegerät gemäß Anspruch 1, des Weiteren mit:
einer Düse (17), die eine Klebemittelauslassöffnung (86) hat, durch die das Klebemittel ausgelassen werden kann;
einem Zuführabschnitt (81-84, 91, 122, 123, 124), der dazu angepasst ist, die Düse mit dem Klebemittel zu versorgen, das aus der Speicherkammer extrudiert wird, falls die Druckquelle das Gas durch den Gaszuführanschluss in die Speicherkammer zuführt; und
einem Zuführsteuerabschnitt (201), der den Antrieb des Zuführabschnitts steuert, wobei
der Auslassventilsteuerabschnitt das Auslassventil zu einen Öffnungszustand schaltet, falls der Zuführsteuerabschnitt die Zufuhr des Klebemittels durch den Zuführabschnitt stoppt.

3. Tuchfügegerät gemäß Anspruch 2, des Weiteren mit:
einem Eingabeabschnitt (208), der den Antrieb des Zuführabschnitts durch den Zuführsteuerabschnitt startet und stoppt;
einem Messabschnitt (201), der eine verstrichene Zeit misst, nachdem der Eingabeabschnitt den Antrieb des Zuführabschnitts durch den Zuführsteuerabschnitt gestoppt hat; und
einem Zeitfestlegungsabschnitt (201), der eine Zeitperiode misst, nachdem der Eingabeabschnitt den Antrieb des Zuführabschnitts durch den Zuführsteuerabschnitt gestoppt hat, bis der Auslassventilsteuerabschnitt das Auslassventil zu dem Öffnungszustand schaltet, wobei
der Auslassventilsteuerabschnitt das Auslassventil zu dem Öffnungszustand schaltet, falls die verstrichene Zeit die Zeitperiode erreicht hat, die durch den Zeitfestlegungsabschnitt festgelegt wird.

4. Tuchfügegerät gemäß einem der Ansprüche 1 bis 3, des Weiteren mit:
einem Heizabschnitt (101, 102), der dazu angepasst ist, das Klebemittel in der Speicherkammer zu heizen; und
einem Heizsteuerabschnitt (201), der den Antrieb des Heizabschnitts steuert, wobei
der Auslassventilsteuerabschnitt das Auslassventil zu dem Öffnungszustand schaltet, falls der Heizabschnitt das Klebemittel in der Speicherkammer auf eine vorbestimmte Temperatur gemäß der Steuerung durch den Heizsteuerabschnitt erhitzt hat.

5. Tuchfügegerät gemäß einem der Ansprüche 1 bis 4, wobei:
die Speicherkammer dazu angepasst ist, eine Kartusche (60) lösbar unterzubringen, die das Klebemittel speichert;
wobei die Kartusche dazu angepasst ist, ein Trocknungsmittel (62) zu enthalten, das Wasser in der Kartusche adsorbiert;
der Gaszuführanschluss dazu angepasst ist, das Gas von der Druckquelle in die Kartusche zuzuführen; und
der Gasauslassanschluss dazu angepasst ist, das Gas in der Kartusche zu der Außenseite der Speicherkammer auszulassen.

6. Tuchfügegerät gemäß Anspruch 5, wobei:
der Deckelabschnitt den Gasauslassanschluss und einen Nadelabschnitt (70) aufweist, der dazu angepasst ist, ein Loch (66) in der Kartusche auszubilden, wobei das Loch zum Zuführen des Gases von der Druckquelle in die Kartusche verwendet wird;
der Nadelabschnitt einen Ausschnittabschnitt (701) in einem Außenumfang aufweist, wobei der Ausschnittabschnitt dazu angepasst ist, das Gas in der Kartusche zu der Außenseite der Kartusche auszulassen; und
der Gaszuführanschluss durch einen inneren Abschnitt des Nadelabschnitts hindurch tritt.

## Revendications

1. Dispositif de collage de tissus (1), comprenant :
une chambre de stockage (18) qui présente une ouverture et qui est adaptée afin de contenir un adhésif (55) ;
une partie formant couvercle (47) qui est agencée sur l'ouverture de la chambre de stockage et qui permet de libérer et d'obturer l'ouverture ;
un orifice d'alimentation de gaz (49) qui est agencé sur la partie formant couvercle et qui est adapté afin de délivrer du gaz dans la chambre de stockage ;
une source de pression (217) qui est adaptée afin de délivrer le gaz à travers l'orifice d'alimentation de gaz dans la chambre de stockage, extrudant ainsi l'adhésif de la chambre de stockage,
**caractérisé par** :
un orifice de déchargement de gaz (72) qui est adapté afin de décharger le gaz de la chambre de stockage vers l'extérieur de la chambre de stockage ;
une vanne de déchargement (73) qui est adaptée afin d'ouvrir et de fermer l'orifice de déchargement de gaz, et qui décharge le gaz de la chambre de stockage vers l'extérieur de la chambre de stockage en ouvrant l'orifice de déchargement de gaz ; et
une partie de commande de vanne de déchargement (201) qui commande la commutation entre l'ouverture et la fermeture de la vanne de déchargement.

2. Dispositif de collage de tissus selon la revendication 1, comprenant en outre :
un injecteur (17) qui comporte une ouverture de distribution d'adhésif (86) à travers laquelle l'adhésif peut être distribué ;
une partie d'alimentation (81 à 84, 91, 122, 123, 124) qui, dans un cas où la source de pression délivre le gaz à travers l'orifice d'alimentation de gaz dans la chambre de stockage, est adaptée afin d'alimenter l'injecteur avec l'adhésif extrudé à partir de la chambre de stockage ; et
une partie de commande d'alimentation (201) qui commande l'activation de la partie d'alimentation, dans lequel :
la partie de commande de vanne de déchargement commute la vanne de déchargement vers un état ouvert dans le cas où la partie de commande d'alimentation arrête l'alimentation de l'adhésif par la partie d'alimentation.

3. Dispositif de collage de tissus selon la revendication 2, comprenant en outre :
une partie d'entrée (208) qui initie et arrête l'activation de la partie d'alimentation par la partie de commande d'alimentation ;
une partie de mesure (201) qui mesure un temps écoulé à partir du moment où la partie d'entrée arrête l'activation de la partie d'alimentation par la partie de commande d'alimentation ; et
une partie de positionnement de temps (201) qui positionne une période de temps à partir du moment où la partie d'entrée arrête l'activation de la partie d'alimentation par la partie de commande d'alimentation jusqu'à celui où la partie de commande de vanne de déchargement commute la vanne de déchargement vers l'état ouvert, dans lequel :
la partie de commande de vanne de déchargement commute la vanne de déchargement vers l'état ouvert dans le cas où la durée écoulée a atteint la période de temps positionnée par la partie de positionnement de temps.

4. Dispositif de collage de tissus selon l'une quelconque des revendications 1 à 3, comprenant en outre :
une partie de chauffage (101, 102) qui est adaptée afin de chauffer l'adhésif dans la chambre de stockage ; et
une partie de commande de chauffage (201) qui commande l'activation de la partie de chauffage, dans lequel :
la partie de commande de vanne de déchargement commute la vanne de déchargement vers l'état ouvert dans le cas où la partie de chauffage a chauffé l'adhésif dans la chambre de stockage à une température prédéterminée en fonction de la commande par la partie de commande de chauffage.

5. Dispositif de collage de tissus selon l'une quelconque des revendications 1 à 4, dans lequel :
la chambre de stockage est adaptée afin de contenir de manière amovible une cartouche (60) qui contient l'adhésif ;
la cartouche est adaptée afin de contenir un agent déshydratant (62) qui adsorbe l'eau dans la cartouche ;
l'orifice d'alimentation de gaz est adapté afin de délivrer le gaz à partir de la source de pression dans la cartouche ; et
l'orifice de déchargement de gaz est adapté afin de décharger le gaz dans la cartouche vers l'extérieur de la chambre de stockage.

6. Dispositif de collage de tissus selon la revendication 5, dans lequel :
la partie formant couvercle comporte l'orifice de déchargement de gaz et une partie en aiguille (70) qui est adaptée de manière à former un orifice (66) dans la cartouche, l'orifice étant utilisé afin de délivrer le gaz à partir de la source de pression vers la cartouche ;
la partie en aiguille comporte une partie découpée (701) sur une périphérie externe, la partie découpée étant adaptée afin de décharger le gaz dans la cartouche vers l'extérieur de la cartouche ; et
l'orifice d'alimentation de gaz passe à travers une partie interne de la partie en aiguille.
